# EUROPEAN PATENT SPECIFICATION

(11) **EP 2 547 154 B1**
(45) Date of publication and mention of the grant of the patent: **04.06.2014**
(21) Application number: 11173824.1
(22) Date of filing: 13.07.2011
(51) Int. Cl.: H04W 52/02, H04W 88/08

(54) **Method for reducing the power consumption of a base station**
Verfahren zur Reduktion des Stromverbrauchs einer Basisstation
Procédé pour la réduction de la consommation électrique d'une station de base

(43) Date of publication of application: 16.01.2013
(73) Proprietor: Alcatel Lucent, 75007 Paris (FR)
(72) Inventor: Conte, Alberto, 91620 Nozay (FR); Balageas, Carine, 91620 Nozay (FR); Sehier, Philippe, 78141 Velizy (FR)
(74) Representative: Therias, Philippe

(56) References cited:
- EP-A1- 2 175 682
- WO-A1-2009/041871
- ERICSSON ET AL: "Extended cell DTX for enhanced energy-efficient network operation", 3GPP DRAFT; R1-095011{ENERGY EFFICIENCY}, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050389361, [retrieved on 2009-11-05]

## Description

The present invention relates to a method for reducing the power consumption of a base station and more particularly for reducing the activity period of a power amplifier of a base station when traffic demand is low, and have a power amplifier consumption linearly increasing with the traffic load.

Generally, a base station sends on a broadcast channel control data (e.g. pilots or Reference Signals) and downlink user data to terminals located in a cell. These control data are sent, even when there is no downlink user data to convey. In LTE (for Long Term Evolution) standard even if the cell comprises no active terminal (i.e. which receives some downlink user data or transmits some uplink user data), the base station sends control data (pilots) every 250µs. Thus, the base station consumes transmission power for broadcasting control data, even if there is no downlink user data to convey.

Usually, the base station power amplifiers remain switched on, even when there is no signal to transmit. A method for reducing the power consumption of a base station is disclosed in WO 2009/041871 A1.

To this end, the invention relates to a method for reducing the power consumption of a base station, according to claim 1.

The method according to the invention allows creating a longer silent period (unload period) during which the base station adopts an efficient energy saving mode. This unload period permit to reduce the activity period of the base station and consequently his energy consumption.

In addition to the main features aforementioned in the previous paragraph, the method for reducing the power consumption of a base station according to the invention may also have one or more of the additional features below, taken individually or in any technically feasible combination.

In a further not limited embodiment, said sub-frame comprising a part dedicated to transfer control data comprising no or less of control data that said specific sub-frame is a MBSFN sub-frame. More particularly, a MBSFN sub-frame comprises a unique control data which is a reference signal (also appointed symbol reference).

In a further not limited embodiment, when said frame is represented by time on x-axis and frequency on y-axis, said clustering is performed by filling said user data in said frame by column.

In a further not limited embodiment, said clustering is performed according to a scheduler in order to allocate said user data among a plurality of frames and to fill said columns of each frame entirely.

In a further not limited embodiment, said filled columns are not contiguous.

In a further not limited embodiment, said clustering is performed according to the sub-frames data filling starting from the sub-frame with the most control data to the sub-frame with less control data.

In a further not limited embodiment, said clustering is performed by a base station on at least one sub-frame not used by another base station.

In a further not limited embodiment, said method applies to the Long Term Evolution technology, to the Wide band Code Division Multiple Access technology or to the High Speed Downlink Packet Access HSDPA technology.

The invention further relates to a computing program product for a computer, comprising a set of instructions, which when loaded into said computer, causes the computer to carry out the method for reducing the power consumption of a base station.

The invention further relates to a power amplifier adapted for reducing his consumption, according to claim 10.

The invention further relates to a base station for reducing his consumption according to claim 11.

In a not limited embodiment, said base station further comprises a scheduler adapted for allocating said user data among a plurality of frames and to fill columns of each frame entirely.

Further features and advantages of the invention will become clear upon reading the following description given by way of non-limiting indication and with reference to the accompanying drawings, in which:
- Figure 1 is a synoptic scheme of a not limited embodiment of the method for reducing the power consumption of a base station according to the invention,
- Figure 2 is a scheme of a base station according to the invention,
- Figure 3 illustrates a load period and an unload period of a frame according to the invention,
- Figure 4 illustrates a first not limited example of clustering of user data in a load period, said clustering being performed by the method according to the invention,
- Figure 5 illustrates a second and a third not limited examples of clustering of user data in a load period, said clustering being performed by the method according to the invention,
- Figure 6 illustrates a fourth not limited example of clustering of user data in a load period, said clustering being performed by the method according to the invention.

For reasons of clarity, only those elements beneficial for comprehension of the invention have been shown, more specifically schematically and with no regard for scale. Furthermore, like elements illustrated in different figures are denoted by like reference numerals.

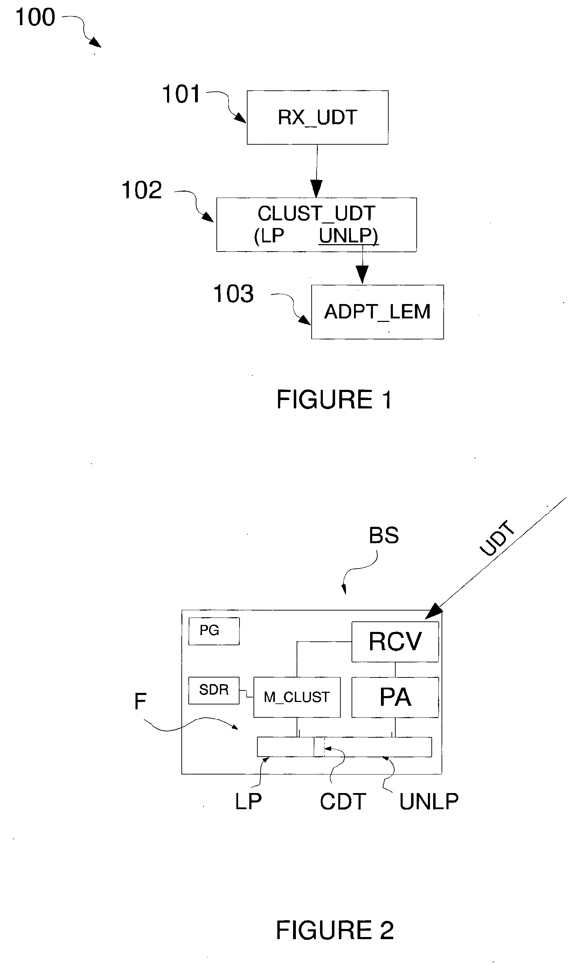

The method 100 for reducing the power consumption of a base station BS according to the invention is detailed below with figures 1, 2, 3, 4, 5 and 6.

The method 100 comprising the followings steps:
- receiving 101 user data UDT (step illustrated RX_UDT in figure 1),
- clustering 102 said user data UDT in a load period LP of a frame F for creating an unload period UNLP of said frame F; in other words, the unload period UNLP can be created when the base station BS is not fully loaded (i.e. when the load of base station BS is inferior to 100%) (step illustrated CLUST_UDT(LP UNLP in figure 1),
- during said unload period UNLP and when no control data CDT is sent, adopting 103 a low energy mode LEM by said base station BS (step illustrated ADPT_LEM in figure 1).

The low energy mode LEM corresponds to a low power consumption of the base station BS, in this low energy mode the power supplied to base station BS is decreased.

According to non-limiting embodiments, the low energy mode is performed by:
- the switching-off a power amplifier PA of the base station BS, the switvhing-off corresponds to cut-off the power stage of the power amplifier PA, or
- the entering of a low power consumption by the power amplifier PA.

It is to be noted that the user data are received from the backhaul network and destined to be transmitted through the radio interface to user terminals as downlink user data.

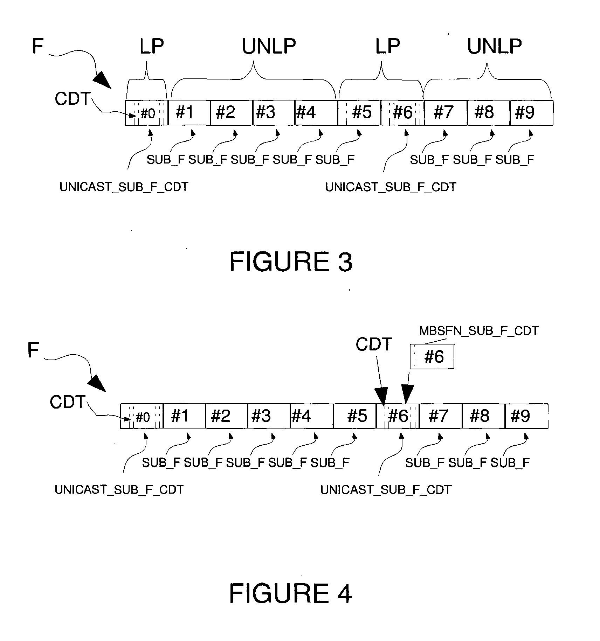

As illustrated in figure 3, a frame F is composed of several sub-frames SUB_F. The load period LP of frame F comprising at least one sub-frame SUB_F (sub-frame #0 in the example illustrated in figure 3) and the unload period UNLP of frame F comprising at least one sub-frame SUB_F (sub-frames #1 to #4 in the example illustrated in figure 3), the at least one sub-frame SUB_F (sub-frames #1 to #4) of the unload period UNLP being different from the at least one sub-frame SUB-F (sub-frame #0) of the load period LP. It could be noted that said frame F illustrated in figure 3 comprises another load period LP comprising sub-frames #5 and #6. Furthermore, said frame F illustrated in figure 3 comprises another unload period UNLP comprising sub-frames #7, #8 and #9.
Hence, the base station BS adopts a low energy mode LEM during the unload periods UNLP :
- from the sub-frame SUB_F#1 to the sub-frame_F#4 ;
- from the sub-frame SUB_F #7 to the sub-frame SUB-F#9.
In the example illustrated in figure 3, the granularity of said frame F is represented by Physical Resource Blocks PRB (i.e. one sub-frame is a PRB). The granularity may be different, say, by symbols.

The unload period UNLP may be created of different manners explained below.
- First not limited embodiment of creating the unload period UNLP.

In a not limited embodiment illustrated in figure 4, the frame F comprises at least a specific unicast sub-frame (sub-frame #6 in the example) comprising at least a part dedicated to transfer control data UN!CAST_SUB_F_CDT. When said specific unicast sub-frame UNICAST_SUB_F_CDT (sub-frame #6) comprises no user data UDT, the clustering 102 is performed by replacing said specific unicast sub-frame UNICAST_SUB_F_CDT (sub-frame #6) comprising no user data UDT by a sub-frame comprising a part dedicated to transfer control data comprising no or less of control data that said specific sub-frame.

For example, the specific unicast sub-frame UNICAST_SUB_F_CDT (sub-frame #6 in the example) is replaced by a broadcast sub-frame such as a MBSFN ("Mobile Broadcast Single Frequency Network") sub-frame MBSFN_SUB_F_CDT. More particularly, a MBSFN sub-frame comprises a unique control data which is a reference signal (also appointed symbol reference).

As the MBSFN sub-frames MBSFN_SUB_F_CDT contains only one reference symbol (instead of four as in the regular unicast sub-frame UNICAST_SUB_F_CDT #6), this permits to switching-off the power amplifier PA of the base station BS on a longer period from said reference symbol.

Hence, the base station BS adopts a low energy mode LEM during the unload periods UNLP from the sub-frame SUB_F#1 to the sub-frame_F#9.

According to a not limited embodiment not illustrated, at most six specific unicast sub-frames UNICAST_SUB_F_CDT are replaced by six MBSFN sub-frame MBSFN_SUB_F_CDT (for the LTE standard).
- Second not limited embodiment of creating the unload period UNLP.

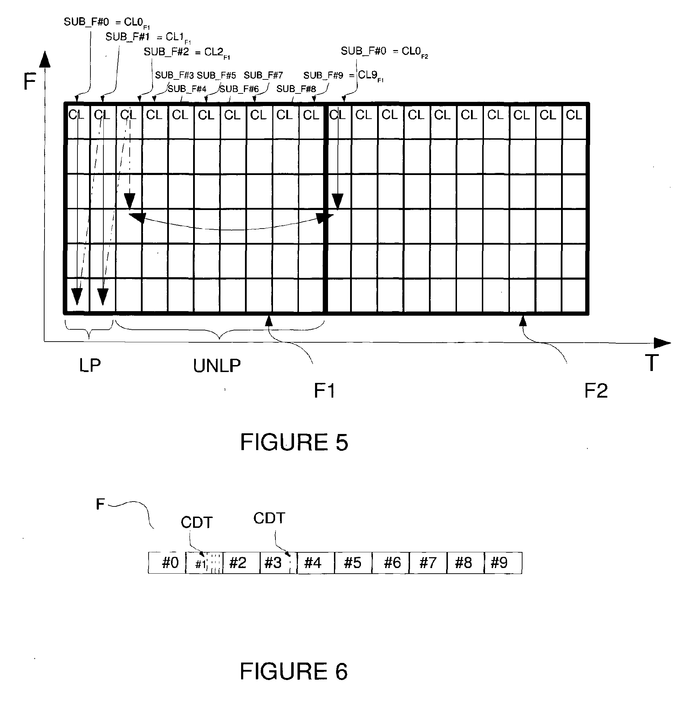

In the embodiment illustrated in figure 5, when the frame F is represented by time on x-axis and frequency on y-axis, the clustering 102 is performed by filling the user data UDT in the frame F by column CL in order to creating a large unload period UNLP.

In other words, in order to create a large unload period UNLP (or empty period) a possible strategy is to fill the frame F by columns, instead of filling it by rows. In this embodiment, we fill a column completely before filling another column.
- Third not limited embodiment of creating the unload period UNLP.

In this embodiment illustrated in figures 5 and 2, the clustering 102 is performed according to a scheduler SDR in order to allocate user data UDT among a plurality of frames F1, F2 and to fill columns CL of each frame F1, F2 entirely.

In other words, the scheduler SDR decide to delay some user data UDT available in the base station BS in order to schedule the filling later and thus to create longer unload period UNLP of sub-frames (obviously taking into account QoS/Delay requirements of the user data UDT to be delivered) and minimize the number of partially-filled sub-frame SUB_F (i.e. sub-frame not completely filled with user data UDT).

For example, one fills a first column CL0_{F1} (the first sub-frame SUB_F#0) of a first frame F1, then when the first column CL0_{F1} is completely filled, one fills a second column CL1_{F1} (the second sub-frame SUB_F #1) of the first frame F1. When the second column CL1_{F1} is completely filled, one look if the third column CL2_{F1} (the third sub-frame SUB_F #2) may be filled entirely. If user data UDT do not permit to fill entirely the third column CL2_{F1} of the first frame F1, then those user data UDT are scheduled later and are filed in another column of another frame, the first column CL0_{F2} of the second frame F2 in the example illustrated in figure 5.

This embodiment allows to create a larger unload period UNLP in the first frame F1 (eight column in the not limited example). To resume, in this example, it is more optimal to delay user data UDT sent in physical resource blocks PRB belonging to sub-frame SUB_F#2 (or third column CL2_{F1}) of frame F1 in the next frame F2 (if compatible with traffic QoS/Delay requirements). This permits to activate the base station BS low energy mode LEM from sub-frame SUB_F#2 of the first frame F1, which is therefore empty (or third column CL2_{F1}) to the sub-frame SUB_F#9 (or tenth column CL9_{F1}). Hence, during said unload period UNLP from sub-frame SUB_F#2 to sub-frame SUB_F#9, the base station BS adopts a low energy mode LEM.

It can be noted that in the second and the third embodiment, the filled columns are not necessarily contiguous. Thus, according to this embodiment, the first column and the tenth column of the first frame can be filled and columns two to nine not filled.
- Fourth not limited embodiment of creating the unload period UNLP.

In a possible further embodiment, the clustering 102 is performed according to the sub-frames data filling starting from the sub-frame with the most control data CDT to the sub-frame with less control data CDT.

This embodiment comprises:
- classifying sub-frames SUB-F that compose the frame F in terms of activity, i.e. function of control data loading. According to the example illustrated in figure 6, the sub-frame SUB_F#1 has more activity than the sub-frame SUB_F#3 (the sub-frame SUB_F#1 having four control data CDT and the sub-frame SUB_F#3 having only one control data CDT); then
- filling the frame F following the classification order, starting from the sub-frame SUB_F with the higher activity, i.e. sub-frame SUB_F#1 in the example. Thus, according to the fourth embodiment illustrated in figure 6, the sub-frame SUB_F#1 will be filled before the sub-frame SUB_F#3, and then the sub-frame SUB_F#3 will be filled before all the others sub-frames SUB_F#0, 2, 4, 5, 6, 7, 8 and 9.
Hence, the base station BS adopts a low energy mode LEM during the unload periods UNLP represented by the sub-frames SUB_F which are not filled.

It is to be noted that all the fourth embodiments described above may be combined all together or one with each other.

In a not limited embodiment, the clustering 102 is performed by a base station BS on at least one sub-frame SUB_F not used by another base station BS.

Said embodiment may be applied to all the four embodiments described above. According to a variant of said embodiment, the base station BS is informed of sub-frames SUB_F selected by other base stations, say,
- base stations mutually exchange said information of selecting,
- central means for broadcasting said information of selecting to base stations, or
- base stations are configured with predefined sequences of frame filling.

According to another variant of said embodiment, all base stations BS randomly choose sub-frames SUB_F. It is possible because, the probability of choosing the same sub-frame SUB_F is limited.

In a general manner applied to all the previous embodiments of said method 100, the frame F comprises a Physical Resource blocks PRB granularity, as it is allowed by Long Term Evolution LTE standard. However, the invention may apply to any granularity, say, symbol granularity: creating unload periods UNLP (or empty periods) remains unchanged and filling by columns remains an efficient way to fill the frame F.

Hence, according to the invention, frame filling can be more or less optimal depending on the filling strategy. A generic (i.e. applicable to different frame format / radio interfaces / granularities) optimal filling strategy deal with the sending of user data UDT when the sub-frame is already active (for sending control data, e.g. pilots, synchronization signals, broadcast information...) or are most active (e.g. in sub-frames with more pilots or other broadcast signals). In this way, the energy price to pay for sending user data UDT is minimized, as the base station BS is already consuming. Obviously, in frame F where there is no traffic (unload period), less pilots can be sent (e.g. by using MBSFN sub-frames), further minimizing the overall power activity and thus the energy consumption of the base station BS.

It can be noted that, the method 100 for reducing the power consumption of a base station BS applies to the Long Term Evolution LTE technology or to the Wide band Code Division Multiple Access WDCMA technology or more generally to other standards such as the High Speed Downlink Packet Access HSDPA.

The method 100 for reducing the consumption of a base station may be implemented in a base station BS so that the base station BS reduces his consumption. For that purposes, as illustrated in figure 2, the base station BS comprises:
- a receiver RCV adapted for receiving user data UDT,
- means for clustering M_CLUST said user data UDT in a load period LP of a frame F for creating an unload period UNLP of the frame F,
- a power amplifier PA adapted for adopting a low energy mode LEM during the unload period UNLP and when no control data CDT is sent.

The base station BS further comprises a scheduler SDR adapted for allocating said user data UDT among a plurality of frames F1, F2 and to fill columns CL of each frame F1, F2 entirely.

The invention relates also to a computing program product PG for a computer, comprising a set of instructions, which when loaded into said computer, causes the computer to carry out the method 100 for reducing the power consumption of the base station BS.

The invention further relates a power amplifier PA adapted for reducing his consumption and then the consumption of a base station BS. For that purpose, the power amplifier PA communicating with:
- a receiver RCV adapted for receiving user data UDT,
- means for clustering M_CLUSTER said user data UDT in a load period LP of a frame F for creating an unload period UNLP of said frame F.

The power amplifier PA is further adapted for adopting a low energy mode LEM during said unload period UNLP and when no control data CDT is sent.

## Claims

1. Method (100) for reducing the power consumption of a base station (BS), said method (100) comprising :
- receiving (101) user data (UDT),
- clustering (102) said user data (UDT) in a load period (LP) of a frame (F) for creating an unload period (UNLP) of said frame (F), said frame (F) being composed of several sub-frames (SUB_F),
- said load period (LP) of frame (F) comprising at least one sub-frame (SUB_F),
- said unload period (UNLP) of frame (F) comprising at least one sub-frame (SUB_F), said at least one sub-frame (SUB_F) of said unload period (UNLP) being different from said at least one sub-frame (SUB-F) of said load period (LP),
during said unload period (UNLP) and when no control data (CDT) is sent, adopting (103) a low energy mode (LEM) by said base station (BS), said method being **characterized in that** said frame (F) comprises at least a specific unicast sub-frame comprising at least a part dedicated to transfer control data (UNICAST_SUB_F_CDT) and wherein when said specific unicast sub-frame (UNICAST_SUB_F_CDT) comprises no user data (UDT), the clustering (102) is performed by replacing said specific unicast sub-frame (UNICAST_SUB_F_CDT) comprising no user data (UDT) by a sub-frame comprising at least a part dedicated to transfer control data comprising no or less of control data that said specific sub-frame (UNICAST_SUB_F_CDT).

2. Method (100) according to claim 1, wherein said sub-frame comprising at least a part dedicated to transfer control data comprising no or less of control data that said specific sub-frame (UNICAST_SUB_F_CDT) is a MBSFN sub-frame (MBSFN_SUB_F_CDT).

3. Method (100) according to any of the preceding claims, wherein when said frame (F) is represented by time on x-axis and frequency on y-axis, said clustering (102) is performed by filling said user data (UDT) in said frame (F) by column (CL).

4. Method (100) according to claim 3, wherein said clustering (102) is performed according to a scheduler in order to allocate said user data (UDT) among a plurality of frames (F1, F2) and to fill said columns (CL) of each frame (F1, F2) entirely.

5. Method (100) according to claim 3 or 4, wherein said filled columns (CL) are not contiguous.

6. Method (100) according to any of the preceding claims, wherein said clustering (102) is performed according to the sub-frames data filling starting from the sub-frame (SUB_F) with the most control data to the sub-frame (SUB_F) with less control data.

7. Method (100) according to any of the preceding claims, wherein said clustering (102) is performed by a base station on at least one sub-frame not used by another base station (BS).

8. Method (100) according to any of the preceding claims, wherein said method (100) applies to the Long Term Evolution LTE technology, to the Wide band Code Division Multiple Access WDCMA technology or to the High Speed Downlink Packet Access HSDPA technology.

9. Computing program product (PG) for a computer, comprising a set of instructions, which when loaded into said computer, causes the computer to carry out the method (100) for reducing the power consumption of a base station (BS) as claimed in any one of claims 1 to 8.

10. Power amplifier (PA) adapted for reducing the power consumption of a base station (BS), said power amplifier (PA) communicating with :
- a receiver (RCV) adapted for receiving user data (UDT),
- means for clustering (M_CLUSTER) said user data (UDT) in a load period (LP) of a frame (F) for creating an unload period (UNLP) of said frame (F), said frame (F) being composed of several sub-framers (SUB_F),
- said load period (LP) of frame (F) comprising at least one sub-frame (SUB_F),
- said unload period (UNLP) of frame (F) comprising at least one subframe (SUB_F), said at least one sub-frame (SUB_F) of said unload period (UNLP) being different from said at least one sub-frame (SUB-F) of said load period (LP),
said power amplifier (PA) being adapted for adopting a low energy mode (LEM) during said unload period (UNLP) and when no control data (CDT) is sent, said power amplifier (PA) being **characterized in that** said frame (F) comprises at least a specific unicast sub-frame comprising at least a part dedicated to transfer control data (UNICAST_SUB_F_CDT) and when said specific unicast sub-frame (UNICAST SUB_F CDT) comprises no user data (UDT), said means for clustering (M_CLUSTER) said user data (UDT) are adapted to replacing said specific unicast sub-frame (UNICAST_SUB_F_CDT) comprising no user data (UDT) by a sub-frame comprising at least a part dedicated to transfer control data comprising no or less of control data that said specific sub-frame (UNICAST_SUB_F_CDT).

11. Base station (BS) for reducing his power consumption, said base station (BS) comprising:
- a receiver (RCV) adapted for receiving user data (UDT),
- means for clustering (M_CLUSTER) said user data (UDT) in a load period (LP) of a frame (F) for creating an unload period (UNLP) of said frame (F), said frame (F) being composed of several sub-frames (SUB_F),
- said load period (LP) of frame (F) comprising at least one sub-frame (SUB_F),
- said unload period (UNLP) of frame (F) comprising at least one sub-frame (SUB_F), said at least one sub-frame (SUB_F) of said unload period (UNLP) being different from said at least one sub-frame (SUB-F) of said load period (LP),
- a power amplifier (PA) adapted for adopting a low energy mode (LEM) during said unload period (UNLP) and when no control data (CDT) is sent,
said base station (BS) being **characterized in that** said frame (F) comprises at least a specific unicast sub-frame comprising at least a part dedicated to transfer control data (UNICAST_SUB_F_CDT) and when said specific unicast sub-frame (UNICAST_SUB_F_CDT) comprises no user data (UDT), said means for clustering (M_CLUSTER) said user data (UDT) are adapted to replacing said specific unicast sub-frame (UNICAST_SUB_F_CDT) comprising no user data (UDT) by a sub-frame comprising at least a part dedicated to transfer control data comprising no or less of control data that said specific sub-frame (UNICAST_SUB_F_CDT).

12. Base station (BS) according to claim 11 wherein said base station (BS) comprises a scheduler (SDR) adapted for allocating said user data (UDT) among a plurality of frames (F1, F2) and to fill columns (CL) of each frame (F1, F2) entirely.

## Patentansprüche

1. Verfahren zur Reduzierung des Stromverbrauchs einer Basisstation (BS), wobei das besagte Verfahren (100) umfasst:
- Empfangen (101) von Nutzdaten (UDT),
- Clustern (102) der besagten Nutzdaten (UDT) in einem lasttragenden Zeitabschnitt (LP) eines Rahmens (F), um einen lastlosen Zeitabschnitt (UNLP) des besagten Rahmens (F) zu schaffen, wobei der besagte Rahmen (F) aus mehreren Teilrahmen (SUB_F) besteht,
- wobei der besagte lasttragende Zeitabschnitt (LP) des Rahmens (F) mindestens einen Teilrahmen (SUB_F) umfasst,
- wobei der besagte lastlose Zeitabschnitt (UNLP) des Rahmens (F) mindestens einen Teilrahmen (SUB_F) umfasst, wobei sich der besagte mindestens eine Teilrahmen (SUB_F) des besagten lastlosen Zeitabschnitts (UNLP) von dem besagten mindestens einen Teilrahmen (SUB-F) des besagten lasttragenden Zeitabschnitts (LP) unterscheidet,
während des besagten lastlosen Zeitabschnitts (UNLP) und wenn keine Steuerungsdaten (CDT) gesendet werden, Annehmen (103) eines energiesparenden Modus (LEM) durch die besagte Basisstation (BS),
wobei das besagte Verfahren **dadurch gekennzeichnet ist, dass** der besagte Rahmen (F) mindestens einen spezifischen Unicast-Teilrahmen mit mindestens einem der Übertragung von Steuerungsdaten (UNICAST_SUB_F_CDT) gewidmeten Teil umfasst, und wobei, wenn der besagte spezifische Unicast-Teilrahmen (UNICAST_SUB_F_CDT) keine Nutzdaten (UDT) umfasst, das Clustern durch Ersetzen des besagten spezifischen Unicast-Teilrahmens (UNICAST_SUB_F_CDT), welcher keine Nutzdaten (UDT) umfasst, durch einen Teilrahmen, welcher mindestens einen der Übertragung von Steuerungsdaten gewidmeten Teil enthält, welcher keine oder weniger Steuerungsdaten als der spezifische Teilrahmen (UNICAST_SUB_F_CDT) umfasst, erfolgt.

2. Verfahren (100) nach Anspruch 1, wobei der besagte Teilrahmen zumindest einen Teil, welcher der Übertragung von Steuerungsdaten gewidmet ist, der keine oder weniger Steuerungsdaten als der besagte spezifische Teilrahmen (UNICAST_SIB_F_CDT) umfasst, ein MBSFN-Teilrahmen (MBSFN_SUB_F_CDT) ist.

3. Verfahren (100) nach einem beliebigen der vorstehenden Ansprüche, wobei, wenn der besagte Rahmen (F) mit Zeit auf der X-Achse und Frequenz auf der y-Achse dargestellt wird, das besagte Clustern (102) durch Auffüllen des besagten Rahmens (F) mit den besagten Nutzdaten (UDT) in Spalten (CL) erfolgt.

4. Verfahren (100) nach einem beliebigen der vorstehenden Ansprüche, wobei das besagte Clustern (102) gemäß einem Scheduler durchgeführt wird, um die besagten Nutzdaten (UDT) unter einer Vielzahl von Rahmen (F1, F2) zuzuweisen und die besagten Spalten (CL) eines jeden Rahmens (F1, F2) vollständig zu füllen.

5. Verfahren (100) nach Anspruch 3 oder 4, wobei die besagten gefüllten Spalten (CL) nicht aneinander angrenzen.

6. Verfahren (100) nach einem beliebigen der vorstehenden Ansprüche, wobei das besagte Clustern (102) gemäß dem Auffüllen der Teilrahmen mit Daten, beginnend mit dem Teilrahmen (SUB_F) mit den meisten Steuerungsdaten bis zum Teilrahmen (SUB_F) mit den wenigsten Steuerungsdaten, durchgeführt wird.

7. Verfahren (100) gemäß einem beliebigen der vorstehenden Ansprüche, wobei das besagte Clustern (102) durch eine Basisstation auf zumindest einem nicht von einer anderen Basisstation (BS) benutzten Teilrahmen durchgeführt wird.

8. Verfahren (100) nach einem beliebigen der vorstehenden Ansprüche, wobei sich das besagte Verfahren (100) auf die Long Term Evolution bzw. LTE-Technologie, die Breitband-Codemultiplexzugriffs- bzw. WDCMA-Technologie oder die Hochgeschwindigkeits-Downlink-Paketzugriffs- bzw. HSDPA-Technologie bezieht.

9. Rechenprogramm-Produkt (PG) für einen Computer, umfassend einen Satz von Befehlen, welche, wenn es auf dem besagten Computer geladen ist, bewirken, dass der Computer das Verfahren (100) zur Reduzierung des Stromverbrauchs einer Basisstation (BS) gemäß einem beliebigen der Ansprüche 1 bis 8 durchführt.

10. Leistungsverstärker (PA), geeignet für das Reduzieren des Stromverbrauchs einer Basisstation (BS), wobei der Leistungsverstärker (PA) mit
- einem Empfänger (RCV), welcher für den Empfang von Nutzdaten (UDT) ausgelegt ist,
- Mitteln zum Clustern (M_CLUSTER) der besagten Nutzdaten (UDT) in einem lasttragenden Zeitabschnitt (LP) eines Rahmens (F), um einen lastlosen Zeitabschnitt (UNLP) des besagten Rahmens (F) zu schaffen, wobei der besagte Rahmen (F) aus mehreren Teilrahmen (SUB_F) besteht,
- wobei der besagte lasttragende Zeitabschnitt (LP) des Rahmens (F) mindestens einen Teilrahmen (SUB_F) umfasst,
- wobei der besagte lastlose Zeitabschnitt (UNLP) des Rahmens (F) mindestens einen Teilrahmen (SUB_F) umfasst, wobei sich der besagte mindestens eine Teilrahmen (SUB_F) des besagten lastlosen Zeitabschnitts (UNLP) von dem besagten mindestens einen Teilrahmen (SUB-F) des besagten lasttragenden Zeitabschnitts (LP) unterscheidet,
kommuniziert,
wobei der besagte Leistungsverstärker (PA) dazu ausgelegt ist, während des besagten lastlosen Zeitabschnitts (UNLP), und wenn keine Steuerungsdaten (CDT) gesendet werden, einen energiesparenden Modus (LEM) anzunehmen, wobei der besagte Leistungsverstärker (PA) **dadurch gekennzeichnet ist, dass** der besagte Rahmen (F) mindestens einen spezifischen Unicast-Teilrahmen mit mindestens einem der Übertragung von Steuerungsdaten (UNICAST_SUB_F_CDT) gewidmeten Teil umfasst, und wobei der besagte spezifische Unicast-Teilrahmen (UNICAST_SUB_F_CDT) keine Nutzdaten (UDT) umfasst, wobei die besagten Mittel zum Clustern (M_CLUSTER) der besagten Nutzdaten (UDT) für das Ersetzen des besagten spezifischen Unicast-Teilrahmens (UNICAST_SUB_F_CDT), welcher keine Nutzdaten (UDT) umfasst, durch einen Teilrahmen, welcher mindestens einen der Übertragung von Steuerungsdaten gewidmeten Teil enthält, welcher keine oder weniger Steuerungsdaten als der spezifische Teilrahmen (UNICAST_SUB_F_CDT) umfasst, ausgelegt sind.

11. Basisstation (BS) zur Reduzierung des Stromverbrauchs, wobei die besagte Basisstation (BS) umfasst:
- einen Empfänger (RCV), welcher für den Empfang von Nutzdaten (UDT) ausgelegt ist,
- Mittel zum Clustern (M_CLUSTER) der besagten Nutzdaten (UDT) in einem lasttragenden Zeitabschnitt (LP) eines Rahmens (F), um einen lastlosen Zeitabschnitt (UNLP) des besagten Rahmens (F) zu schaffen, wobei der besagte Rahmen (F) aus mehreren Teilrahmen (SUB_F) besteht,
- wobei der besagte lasttragende Zeitabschnitt (LP) des Rahmens (F) mindestens einen Teilrahmen (SUB_F) umfasst,
- wobei der besagte lastlose Zeitabschnitt (UNLP) des Rahmens (F) mindestens einen Teilrahmen (SUB_F) umfasst, wobei sich der besagte mindestens eine Teilrahmen (SUB_F) des besagten lastlosen Zeitabschnitts (UNLP) von dem besagten mindestens einen Teilrahmen (SUB-F) des besagten lasttragenden Zeitabschnitts (LP) unterscheidet,
- einen Leistungsverstärker (PA), welcher dazu ausgelegt ist, während des besagten lastlosen Zeitabschnitts (UNLP), und wenn keine Steuerungsdaten (CDT) gesendet werden, einen energiesparenden Modus (LEM) anzunehmen,
wobei die besagte Basisstation (BS) **dadurch gekennzeichnet ist, dass** der besagte Rahmen (F) mindestens einen spezifischen Unicast-Teilrahmen mit mindestens einem der Übertragung von Steuerungsdaten (UNICAST_SUB_F_CDT) gewidmeten Teil umfasst, und wobei der besagte spezifische Unicast-Teilrahmen (UNICAST_SUB_F_CDT) keine Nutzdaten (UDT) umfasst, wobei die besagten Mittel zum Clustern (M_CLUSTER) der besagten Nutzdaten (UDT) für das Ersetzen des besagten spezifischen Unicast-Teilrahmens (UNICAST_SUB_F_CDT), welcher keine Nutzdaten (UDT) umfasst, durch einen Teilrahmen, welcher mindestens einen der Übertragung von Steuerungsdaten gewidmeten Teil enthält, welcher keine oder weniger Steuerungsdaten als der spezifische Teilrahmen (UNICAST_SUB_F_CDT) umfasst, ausgelegt sind.

12. Basisstation (BS) nach Anspruch 11, wobei die besagte Basisstation (BS) einen Scheduler (SDR) umfasst, welcher für das Zuweisen der besagten Nutzdaten (UDT) unter einer Vielzahl von Rahmen (F1, F2) und für das vollständige Füllen von Spalten (CL) eines jeden Rahmens (F1, F2) ausgelegt ist.

## Revendications

1. Procédé (100) pour réduire la consommation d'énergie d'une station de base (BS), ledit procédé (100) comprenant les étapes suivantes :
- recevoir (101) des données d'utilisateur (UDT),
- regrouper (102) lesdites données d'utilisateur (UDT) durant une période de charge (LP) d'une trame (F) pour créer une période de décharge (UNLP) de ladite trame (F), ladite trame (F) étant composée de plusieurs sous-trames (SUB_F),
- ladite période de charge (LP) de la trame (F) comprenant au moins une sous-trame (SUB_F),
- ladite période de décharge (UNLP) de la trame (F) comprenant au moins une sous-trame (SUB_F), ladite au moins une sous-trame (SUB_F) de ladite période de décharge (UNLP) étant différente de ladite au moins une sous-trame (SUB_F) de ladite période de charge (LP),
durant ladite période de décharge (UNLP) et lorsqu'aucune donnée de contrôle (CDT) n'est envoyée, adopter (103) un mode de faible énergie (LEM) par ladite station de base (BS), ledit procédé étant **caractérisé en ce que** ladite trame (F) comprend au moins une sous-trame de monodiffusion spécifique comprenant au moins une partie dédiée aux données de contrôle de transfert (UNICAST_SUB_F_CDT) et dans lequel lorsque ladite sous-trame de monodiffusion spécifique (UNICAST_SUB_F_CDT) ne comprend aucune donnée d'utilisateur (UDT), le regroupement (102) est réalisé en remplaçant ladite sous-trame de monodiffusion spécifique (UNICAST_SUB_F_CDT) ne comprenant aucune donnée d'utilisateur (UDT) par une sous-trame comprenant au moins une partie dédiée aux données de contrôle de transfert ne comprenant aucune donnée de contrôle ou comprenant moins de données de contrôle (that than) que ladite sous-trame spécifique (UNICAST_SUB_F_CDT).

2. Procédé (100) selon la revendication 1, dans lequel ladite sous-trame comprenant au moins une partie dédiée aux données de contrôle de transfert ne comprenant aucune donnée de contrôle ou comprenant moins de données de contrôle (that than) que ladite sous-trame spécifique (UNICAST_SUB_F_CDT) est une sous-trame MBSFN (MBSFN_SUB_F_CDT).

3. Procédé (100) selon l'une quelconque des revendications précédentes, dans lequel lorsque ladite trame (F) est représentée par le temps sur l'axe x et la fréquence sur l'axe y, ledit regroupement (102) est réalisé en chargeant lesdites données d'utilisateur (UDT) dans ladite trame (F) par colonne (CL).

4. Procédé (100) selon revendication 3, dans lequel ledit regroupement (102) est réalisé conformément à un planificateur afin d'attribuer lesdites données d'utilisateur (UDT) parmi une pluralité de trames (F1, F2) et de remplir entièrement lesdites colonnes (CL) de chaque trame (F1, F2),

5. Procédé (100) selon la revendication 3 ou 4, dans lequel lesdites colonnes remplies (CL) ne sont pas contiguës.

6. Procédé (100) selon l'une quelconque des revendications précédentes, dans lequel ledit regroupement (102) est réalisé conformément au remplissage des données de sous-trames en commençant par la sous-trame (SUB_F) ayant le plus de données de contrôle puis par la sous-trame (SUB_F) ayant le moins de données de contrôle.

7. Procédé (100) selon l'une quelconque des revendications précédentes, dans lequel ledit regroupement (102) est réalisé par une station de base sur au moins une sous-trame non utilisée par une autre station de base (BS).

8. Procédé (100) selon l'une quelconque des revendications précédentes, dans lequel ledit procédé (100) s'applique à la technologie d'évolution à long terme LTE, à la technologie d'accès multiple à large bande par partage de code AMRC large bande ou à la technologie d'accès par paquets en liaison descendante haut débit HSDPA.

9. Produit de programme informatique (PG) pour un ordinateur, comprenant un ensemble d'instructions qui, lorsqu'elles sont chargées dans ledit ordinateur, entraînent l'exécution par l'ordinateur du procédé (100) de réduction de la consommation d'énergie d'une station de base (BS) selon l'une quelconque des revendications 1 à 8.

10. Amplificateur de puissance (PA) adapté pour réduire la consommation d'énergie d'une station de base (BS), ledit amplificateur de puissance (PA) communiquant avec :
- un récepteur (RCV) adapté pour recevoir des données d'utilisateur (UDT),
- des moyens pour regrouper (M_CLUSTER) lesdites données d'utilisateur (UDT) durant une période de charge (LP) d'une trame (F) pour créer une période de décharge (UNLP) de ladite trame (F), ladite trame (F) étant composée de plusieurs sous-trames (SUB_F),
- ladite période de charge (LP) de la trame (F) comprenant au moins une sous-trame (SUB_F),
- ladite période de décharge (UNLP) de la trame (F) comprenant au moins une sous-trame (SUB_F), ladite au moins une sous-trame (SUB_F) de ladite période de décharge (UNLP) étant différente de ladite au moins une sous-trame (SUB_F) de ladite période de charge (LP),
ledit amplificateur de puissance (PA) étant adapté pour adopter un mode de faible énergie (LEM) durant ladite période de décharge (UNLP) et lorsqu'aucune donnée de contrôle (CDT) n'est envoyée, ledit amplificateur de puissance (PA) étant **caractérisé en ce que** ladite trame (F) comprend au moins une sous-trame de monodiffusion spécifique comprenant au moins une partie dédiée aux données de contrôle de transfert (UNICAST_SUB_F_CDT) et lorsque ladite sous-trame de monodiffusion spécifique (UNICAST_SUB_F_CDT) ne comprend aucune donnée d'utilisateur (UDT), lesdits moyens pour regrouper (M_CLUSTER) lesdites données d'utilisateur (UDT) sont adaptés pour remplacer ladite sous-trame de monodiffusion spécifique (UNICAST_SUB_F_CDT) ne comprenant aucune donnée d'utilisateur (UDT) par une sous-trame comprenant au moins une partie dédiée aux données de contrôle de transfert ne comprenant aucune donnée de contrôle ou comprenant moins de données de contrôle que ladite sous-trame spécifique (UNICAST_SUB_F_CDT).

11. Station de base (BS) pour réduire sa consommation d'énergie, ladite station de base (BS) comprenant
- un récepteur (RCV) adapté pour recevoir des données d'utilisateur (UDT),
- des moyens pour regrouper (M_CLUSTER) lesdites données d'utilisateur (UDT) durant une période de charge (LP) d'une trame (F) pour créer une période de décharge (UNLP) de ladite trame (F), ladite trame (F) étant composée de plusieurs sous-trames (SUB_F),
- ladite période de charge (LP) de la trame (F) comprenant au moins une sous-trame (SUB_F),
- ladite période de décharge (UNLP) de la trame (F) comprenant au moins une sous-trame (SUB_F), ladite au moins une sous-trame (SUB_F) de ladite période de décharge (UNLP) étant différente de ladite au moins une sous-trame (SUB_F) de ladite période de charge (LP),
- un amplificateur de puissance (PA), adapté pour adopter un mode de faible énergie (LEM) durant ladite période de décharge (UNLP) et lorsqu'aucune donnée de contrôle (CDT) n'est envoyée,
ladite station de base (BS) étant **caractérisée en ce que** ladite trame (F) comprend au moins une sous-trame de monodiffusion spécifique comprenant au moins une partie dédiée aux données de contrôle de transfert (UNICAST_SUB_F_CDT) et lorsque ladite sous-trame de monodiffusion spécifique (UNICAST_SUB_F_CDT) ne comprend aucune donnée d'utilisateur (UDT), lesdits moyens pour regrouper (M_CLUSTER) lesdites données d'utilisateur (UDT) sont adaptés pour remplacer ladite sous-trame de monodiffusion spécifique (UNICAST_SUB_F_CDT) ne comprenant aucune donnée d'utilisateur (UDT) par une sous-trame comprenant au moins une partie dédiée aux données de contrôle de transfert ne comprenant aucune donnée de contrôle ou comprenant moins de données de contrôle que ladite sous-trame spécifique (UNICAST_SUB_F_CDT).

12. Station de base (BS) selon la revendication 11, dans laquelle ladite station de base (BS) comprend un planificateur (SDR) adapté pour attribuer lesdites données d'utilisateur (UDT) parmi une pluralité de trames (F1, F2) et pour remplir entièrement les colonnes (CL) de chaque trame (F1, F2).
